# EUROPÄISCHE PATENTSCHRIFT

(11) **EP 1 575 830 B1**
(45) Veröffentlichungstag und Bekanntmachung des Hinweises auf die Patenterteilung: **05.09.2007**
(21) Anmeldenummer: 03780107.3
(22) Anmeldetag: 03.12.2003
(51) Int. Cl.: B65B 19/04

(54) **VORRICHTUNG ZUR BILDUNG VON ZIGARETTEN-GRUPPEN**
DEVICE FOR FORMING GROUPS OF CIGARETTES
DISPOSITIF POUR FORMER DES GROUPES DE CIGARETTES

(30) Priorität: 23.12.2002 DE 10261526
(43) Veröffentlichungstag der Anmeldung: 21.09.2005
(73) Patentinhaber: Focke & Co. (GmbH & Co. KG), 27283 Verden (DE)
(72) Erfinder: FOCKE, Heinz, VERSTORBEN (DE); BLOME, Hermann, 27337 Blender-Einste (DE); SPÖRING, Heido, 27283 Verden (DE); TEMPEL, Jürgen, 27283 Verden (DE)
(74) Vertreter: Bolte, Erich
(86) Internationale Anmeldenummer: PCT/EP2003/013609
(87) Internationale Veröffentlichungsnummer: WO 2004/058570

(56) Entgegenhaltungen:
- DE-A- 2 400 680
- GB-A- 1 010 218
- GB-A- 2 099 783
- GB-A- 2 104 035
- US-A- 3 869 035
- US-A- 4 856 538

## Beschreibung

Die Erfindung betrifft eine Vorrichtung zur Bildung von Zigaretten-Gruppen, die durch Stößel aus einem Zigaretten-Magazin mit aufrechten Schächten für je eine Reihe von übereinander liegenden Zigaretten ausschiebbar sind, wobei die Zigaretten-Gruppe nach Austritt aus dem Zigaretten-Magazin entlang einer Förderstrecke mit einem trichterförmig ausgebildeten Seitenwände mit konvergierenden Innenflächen aufweisenden Formstück zum Querverschieben von Zigaretten transportierbar und in eine Tasche eines Zigaretten-Förderers einschiebbar sind.

Eine derartige Vorrichtung ist bekannt aus GB 2 104 035 A oder US 3,689,035 A. Bei dieser bekannten Vorrichtung schließt an das Zigaretten-Magazin ein Formstück an, welches aufgrund konvergierender Seitenwände eine Querverschiebung der randseitigen Zigaretten während der Übergabe an einen Zigarettenrevolver bewirkt. Dadurch werden die mit Abständen voneinander angeordneten Zigaretten in Querrichtung bis zur Dichtlage aneinander bewegt, und zwar unter Bildung von Längsreihen (parallel zur Vorder- und Rückseite einer Packung). Im Bereich des Formstücks sind Rippen an einer Oberwand, an Seitenwänden und einer Bodenwand angebracht, die den Zweck haben, in Verbindung mit entsprechend geformten Stößeln einzelne Zigaretten beim Ausschub der Zigaretten-Gruppe zurückzuhalten. Dadurch wird erreicht, dass in jeweils einer der Längsreihen der Zigaretten einzelne Zigaretten fehlen, also entsprechende Lücken gebildet sind.

Der Erfindung liegt die Aufgabe zugrunde, eine Vorrichtung zur Bildung von Zigaretten-Gruppen so auszubilden, dass bei der Übergabe der Zigaretten-Gruppe vom Zigaretten-Magazin an einen Zigaretten-Förderer im Bereich des Formstücks die Zigaretten ein größeres Maß an Querbewegung ausführen können.

Zur Lösung dieser Aufgabe ist die erfindungsgemäße Vorrichtung dadurch gekennzeichnet, dass mindestens randseitige Stößel mit den zugeordneten Zigaretten im Bereich des Formstücks unter elastischer Verformung quer bewegbar sind.

Dadurch ist es möglich, die Zigaretten durchgehend, nämlich bis in den Bereich des Zigarettenförderers, durch die Stößel zu bewegen und dabei eine beträchtliche Querbewegung der mindestens randseitigen Zigaretten zu ermöglichen.

Die Formation der Zigaretten-Gruppe ist vorzugsweise so gestaltet, dass eine Mehrzahl von aufrechten Reihen nebeneinander angeordnet ist, wobei die Reihen eine unterschiedliche Anzahl von Zigaretten aufweisen, nämlich insbesondere aus zwei oder drei übereinanderliegenden Zigaretten bestehen. Dabei sollen die aus zwei Zigaretten bestehenden Reihen in "Sattellage", also "auf Lücke", zu den Zigaretten der benachbarten Reihen aus drei Zigaretten positioniert sein.

Die langgestreckten Stößel, die zum Ausschieben der Zigaretten in jeden Schacht des Zigaretten-Magazins eintreten, sind in besonderer Weise ausgebildet. Die Stößel bewirken aufgrund von Größe und Relativstellung einen Ausschub von alternativ zwei oder drei übereinanderliegenden Zigaretten. Die Weiche ist so ausgebildet, dass während der Förderbewegung eine Querverschiebung der Zigaretten unter Bildung einer (Quer-)Dichtlage erfolgt und darüber hinaus die Zigaretten der Reihen aus zwei übereinanderliegenden Zigaretten durch untere und/oder obere Führungsorgane, nämlich Führungsstege, abgestützt sind. An den Zigarettenförderer bzw. an eine Tasche desselben wird demnach eine komplett formierte Zigarette-Gruppe übergeben.

Weitere Besonderheiten der Erfindung werden nachfolgend anhand der Zeichnungen näher erläutert. Es zeigt:
- Fig. 1: einen (unteren) Teilbereich eines Zigaretten-Magazins im Vertikalschnitt,
- Fig. 2: das Zigaretten-Magazin gemäß Fig. 1 im Horizontalbereich in einer unteren Schnittebene,
- Fig. 3: eine Darstellung analog Fig. 2 bei veränderter Position von Organen,
- Fig. 4: eine weitere Darstellung entsprechend Fig. 3 bei nochmals veränderter Stellung von Organen,
- Fig. 5: einen Querschnitt im Bereich des Zigaretten-Magazins entsprechend Schnittebene V-V in Fig. 3,
- Fig. 6: einen Querschnitt im Bereich einer Schnittebene VI-VI der Fig. 3,
- Fig. 7: einen Querschnitt im Bereich eines Zigarettenförderers entsprechend Schnittebene VII-VII der Fig. 4.

Bei der Verpackung von Zigaretten 10 - oder vergleichbaren langgestreckten Gegenständen - müssen die in paralleler Ausrichtung, aber ohne Formation zugeführten Zigaretten 10 zunächst zu in besonderer Weise formierten Zigaretten-Gruppen 11 zusammengefasst werden. Eine derartige Zigaretten-Gruppe 11 entspricht dann dem Inhalt einer Zigaretten-Packung.

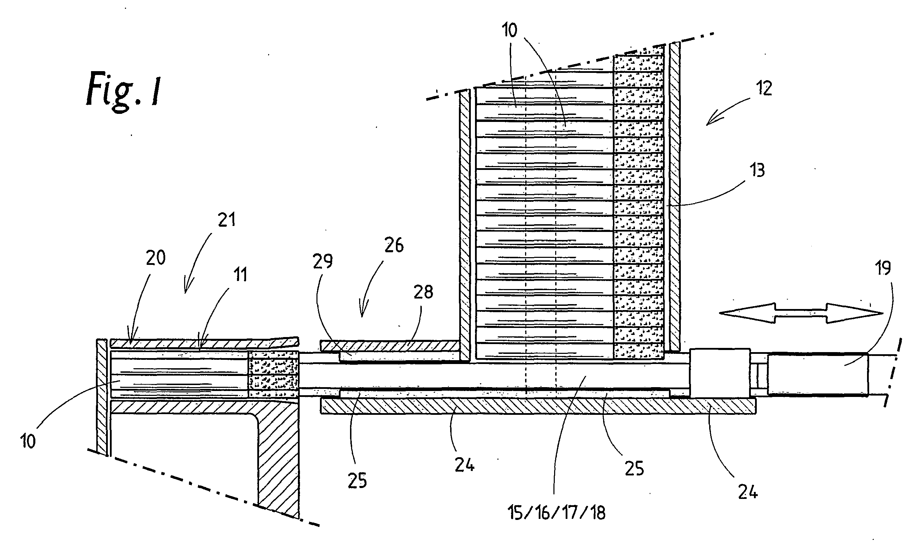

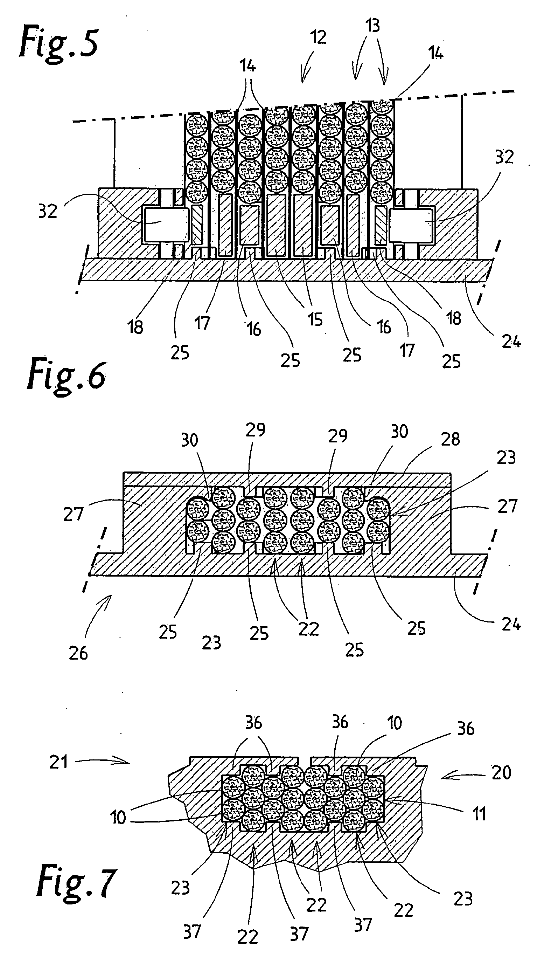

Zur Bildung der Zigaretten-Gruppen 11 werden die Zigaretten 10 in ein Zigaretten-Magazin 12 eingeführt, das im unteren Bereich aus einer Mehrzahl von nebeneinanderliegenden, aufrechten Schächten 13 besteht. Diese sind durch ebenfalls aufrechte, dünne Schachtwände 14 voneinander abgegrenzt. In jedem Schacht 13 befindet sich eine aufrechte Reihe von einzeln übereinander in Dichtlage angeordneten Zigaretten 10 (Fig. 1, Fig. 5).

Zur Bildung einer Zigaretten-Gruppe 11 wird eine entsprechende Anzahl von Zigaretten 10 am unteren Ende aus den Schächten 13 ausgeschoben, und zwar mindestens eine Zigarette 10 aus jedem Schacht 13. Im vorliegenden Falle werden zur Bildung einer besonders formierten Zigaretten-Gruppe 11 jeweils zwei oder drei Zigaretten 10 gleichzeitig aus einem Schacht 13 ausgeschoben. Die Anzahl der nebeneinanderliegenden, zu einer Einheit gehörenden Schächte 13 entspricht der Anzahl der je Arbeitstakt auszuschiebenden Reihen von Zigaretten 10.

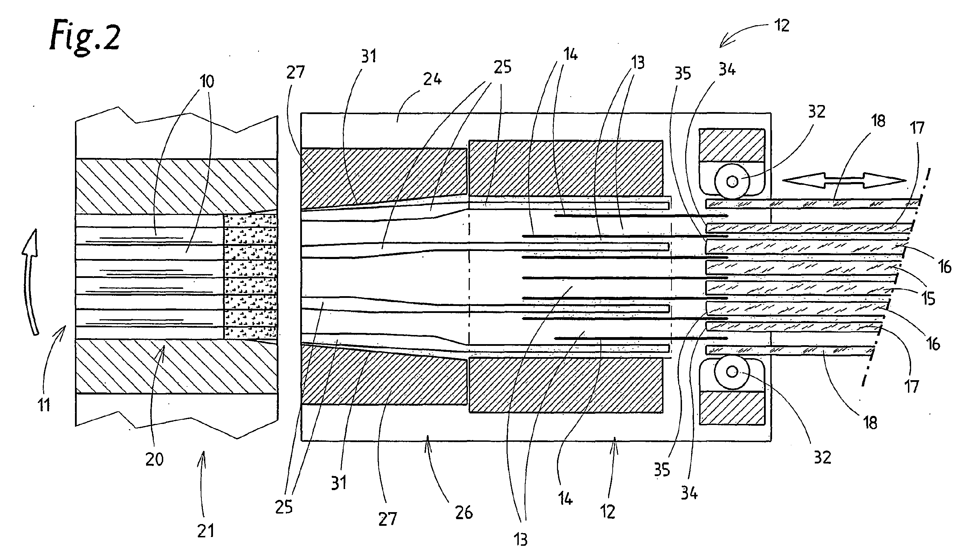

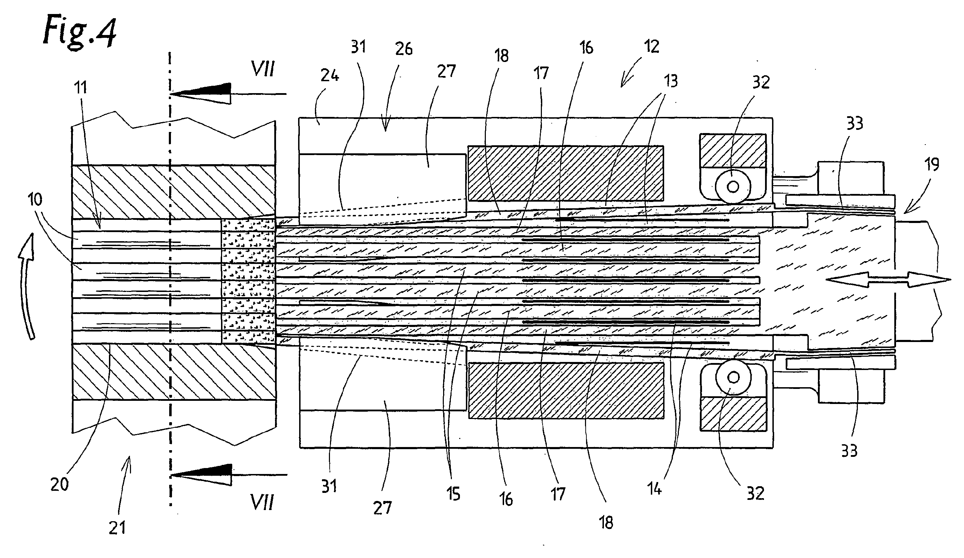

Zum Ausschub einer Zigaretten-Gruppe 11 aus dem Zigaretten-Magazin 12 dienen Stößel 15, 16, 17, 18. Es handelt sich dabei um langgestreckte, einseitig an einem gemeinsamen Träger 19 gelagerte Stege mit im Wesentlichen rechteckigem Querschnittprofil. Die Gesamtheit der Stößel 15 .. 18 wird aus einer Ausgangsstellung an einer Rückseite des Zigaretten-Magazins 12 (rechts in Fig. 1 sowie Fig. 2) durch Verschieben durch die Schächte 13 im unteren Bereich derselben hindurchbewegt bis in eine Endstellung (Fig. 1, Fig. 4), in der die gebildete Zigaretten-Gruppe 11 eine Transportposition erreicht hat, nämlich in einer Tasche 20 eines Zigaretten-Förderers 21.

Die Stößel 15 .. 18 haben unterschiedliche Querschnittsabmessungen, nämlich unterschiedliche Breite und/oder Höhe. Zwei mittlere Stößel 15 dienen zum Ausschieben jeweils einer Reihe 22 aus drei übereinanderliegenden Zigaretten. Die Stößel 15 haben eine Querabmessung die geringfügig kleiner ist als der Innenraum in einem Schacht 13. Benachbart hierzu sollen durch die übereinstimmend ausgebildeten Stößel 16 zwei Zigaretten 10 ausgeschoben werden, also eine Reihe 23 aus zwei übereinanderliegenden Zigaretten 10. Diese sollen bereits beim Ausschub aus dem Zigaretten-Magazin 12 in der Höhe gegenüber den Zigaretten 10 der benachbarten Reihen 22 versetzt sein (Fig. 6). Die Stößel 16 haben eine geringere Höhe als die Stößel 15 und sind auch mit Abstand von einer unteren Begrenzung bzw. Bodenplatte 24 positioniert.

Benachbarte Stößel 17 sind hinsichtlich der Höhe mit den Stößeln 15 vergleichbar. Sie dienen zum Ausschub einer Reihe 22 mit drei Zigaretten 10. Die Stößel 17 haben eine geringere Breite und sind versetzt angeordnet innerhalb der zugeordneten Schächte 13, nämlich an einer den benachbarten Stößeln 16 zugekehrten Seite im Schacht 13 positioniert (Fig. 5). Es entsteht dadurch auf der zum Stößel 18 zugekehrten Seite eine Lücke.

Die außenliegenden Stößel 18 dienen zum Ausschub von Reihen 23 mit zwei Zigaretten 10, sind demnach entsprechend angeordnet und bemessen, jedoch mit einer geringeren Breite, sind also dünnwandig ausgebildet. Die Stößel 18 sind (in Ausgangsstellung) mittig zum zugeordneten Schacht 13 positioniert.

Während der Förderbewegung einer Zigaretten-Gruppe 11 aus dem Zigaretten-Magazin 12 bis zum Zigaretten-Förderer 21 wird die Formation der Zigaretten-Gruppe 11 komplettiert. Wie insbesondere aus Fig. 7 ersichtlich, besteht die Zigaretten-Gruppe 11 bei dem vorliegenden Ausführungsbeispiel aus acht aufrechten Reihen 22, 23, je aus zwei oder drei übereinanderliegenden Zigaretten 10. Außen sind jeweils Reihen 23 mit zwei Zigaretten 10 vorgesehen. In der Mitte der Zigaretten-Gruppe 11 befinden sich zwei Reihen 22 mit auf gleicher Höhe nebeneinanderliegenden Zigaretten 10. Diese Formation einer Zigaretten-Gruppe 11 ist besonders geeignet für Zigaretten-Packungen des Typs Klappschachtel mit runden Seitenwänden.

Der Versatz (Sattellage) der Zigaretten 10 in den Reihen 23 gegenüber den Reihen 22 wird im Bereich des Zigaretten-Magazins 12 vorgegeben. Für die jeweils unteren Zigaretten 10 in ausgewählten Schächten 13 sind bodenseitige Abstandhalter vorgesehen, die die unteren Zigaretten 10 der Reihen 23 mit entsprechendem Abstand - etwa ein halber Zigarettendurchmesser - von der Bodenplatte 24 stützen. Es handelt sich dabei um Stege, und zwar Bodenstege 25, die sich etwa mittig innerhalb der den Reihen 23 zugeordneten Schächte 13 auf der Bodenplatte 24 erstrecken. Die in diese Schächte 13 eintretenden Stößel 16, 18 werden oberhalb der Bodenstege 25 bewegt. Die jeweils untere Zigarette 10 der Reihen 23 liegt auf dem zugeordneten Bodensteg 25. Die als Stützorgan wirkenden Bodenstege 25 erstrecken sich über die komplette Förderstrecke der Zigaretten 10, also bis zum Zigaretten-Förderer 21. Die Zigaretten 10 der Reihen 22 liegen - zwischen den Bodenstegen 25 - unmittelbar auf der Bodenplatte 24.

Das Zigaretten-Magazin 12 befindet sich in einem Abstand von dem Zigaretten-Förderer 21. Im Bereich dieses Zwischenraums ist ein Formstück 26 angeordnet, auch Weiche genannt, welches die Zigaretten 10 bzw. die ausgeschobene Zigaretten-Gruppe 11 während der Transportbewegung in die Endformation bringt. Das Formstück 26 ist auf der gemeinsamen Bodenplatte 24 angebracht und im Wesentlichen als im Querschnitt geschlossener Kanal ausgebildet mit Seitenwänden 27 und einer Deckwand 28. Die Reihen 22 mit drei übereinander angeordneten Zigaretten 10 liegen etwa passend zwischen Bodenplatte 24 und Deckwand 28. Die Zigaretten 10 der Reihen 23 werden auch gegenüber der Deckwand 28 auf Distanz gehalten, und zwar durch obere Stege, nämlich Oberstege 29. Die Stege 25, 29 bilden zugleich seitliche Führungen für die Zigaretten 10 der Reihen 22. Die Zigaretten 10 der randseitigen Reihen 23 sind mindestens an der Oberseite mit einer besonderen Führung versehen, nämlich mit einer die obere Kontur der oberen Zigaretten 10 teilweise formschlüssig umgebenden Führungsnase 30. Diese verhindert, dass Zigaretten 10 der benachbarten Reihen 22, 23 während des Transports eine wechselseitige Störung verursachen.

Eine Besonderheit besteht darin, dass die aufgrund der Gestaltung der Schächte 13 bzw. wegen der Schachtwände 14 mit Abstand voneinander ausgeschobenen Zigaretten 10 im Bereich des Formstücks 26 durch Querbewegung bis zur Dichtlage aneinander verschoben werden (Fig. 6, Fig. 7). Dies wird durch einen in Bewegungsrichtung der Zigaretten 10 sich verengenden, trichterförmigen Querschnitt des Formstücks 26 erreicht, nämlich durch die Seitenwände 27 mit konvergierenden Innenflächen 31. Die Querverschiebung der Zigaretten 10 geht einher mit entsprechender Querverschiebung mindestens der randseitigen Stößel 18. Diese werden während des Vorschubs in Querrichtung belastet, so dass sie der Kontur des Formstücks 26 folgen und nach innen bewegt, nämlich elastisch nach innen verformt werden (Fig. 4), um eine störungsfreie Verformung dieser randseitigen Stößel 18 zu ermöglichen. Randseitige Schachtwände 14 sind mit geringerer Abmessung in Ausschubrichtung der Zigaretten 10 ausgebildet (Fig. 2).

Die Führungs- bzw. Stützstege, nämlich die Bodenstege 24 und die Oberstege 29, folgen der Querverschiebung der randseitigen Zigaretten 10, wobei die Stege 25, 29 eine Kontur mit sich verändernder Breite einer oberen bzw. unteren Stützfläche für die Zigaretten 10 aufweisen, so dass während des Transports im Bereich des Formstücks 26 und im Hinblick auf die Querbewegung ein optimale Abstützung durch die Stege 25, 29 gegeben ist.

Die Querbewegung bzw. Querverformung der randseitigen Stößel 18 während Ausschubbewegung wird durch ortsfeste Leitorgane bewirkt, an denen die Stößel 18 während der Ausschubbewegung anliegen. Es handelt sich dabei um Stützrollen 32, die jeweils seitlich neben der Bewegungsbahn der Stößel mit aufrechter Drehachse gelagert sind. Die Stützrollen 32 liegen an der Außenseite der Stößel 18 an. Die Relativstellung der Stützrollen 32 einerseits und die Form und Stellung der Stößel 18 andererseits ist so gewählt, dass während der Ausschubbewegung eine Verformung der Stößel 18 und eine Querbewegung in Richtung zueinander innerhalb der äußeren Schächte 13 stattfindet. Die Stößel 18 können insgesamt (elastisch) verformbar sein. Bei dem vorliegenden Ausführungsbeispiel sind dünnwandige Endbereiche 33 der Stößel 18 im blockförmigen Träger 19 verankert, derart, dass eine elastische Verformung dieser Endbereiche 33 an der Stelle des Austritts aus dem Träger 19 stattfinden kann, wodurch die Stößel 18 in eine Schrägstellung gebracht werden (Fig. 4). Die Endbereiche 33 sind in leicht konvergierender Relativstellung in Schlitzen des Trägers 19 fixiert. Zusätzlich bzw. alternativ können vordere Enden der Stößel 18 durch die konvergierenden Innenflächen 31 des Formstücks 26 nach innen geleitet werden bei entsprechender Querverschiebung der betroffenen Zigaretten 10.

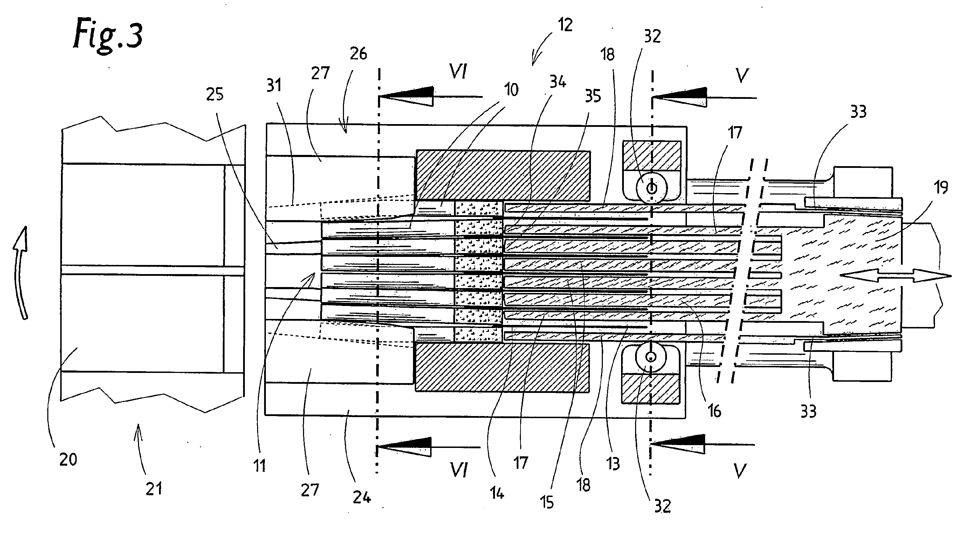

Auch die Zigaretten 10 in benachbarten Schächten 13, nämlich den Stößeln 16 und 17 zugeordnete Zigaretten 10 werden durch das Formstück 26 unter Bildung der Dichtlage querverschoben. Um die Bewegung relativ zu den Stößeln 16, 17 zu erleichtern, sind deren Endflächen 34, 35 in Verschiebungsrichtung der Zigaretten 10 angeschrägt (Fig. 2 bis Fig. 4).

Auch die Tasche 20 des Zigaretten-Förderers 21 ist an die besondere Formation der Zigaretten-Gruppe 11 angepasst. Jede Tasche 20 weist an oberen und unteren bzw. radial äußeren und inneren Taschenwänden Vorsprünge 36, 37 auf, die in durch Reihen 23 mit geringerer Anzahl von Zigaretten 10 gebildete Ausnehmungen bzw. Lücken eintreten (Fig. 7). Die Vorsprünge 36, 37 erstrecken sich in Fortsetzung der Bodenstege 25 bzw. Oberstege 29, jedoch bezogen auf die Anordnung der Zigaretten 10 in Dichtlage innerhalb der Zigaretten-Gruppe 11.

### Bezugszeichenliste

- 10: Zigarette
- 11: Zigaretten-Gruppe
- 12: Zigaretten-Magazin
- 13: Schacht
- 14: Schachtwand
- 15: Stößel
- 16: Stößel
- 17: Stößel
- 18: Stößel
- 19: Träger
- 20: Tasche
- 21: Zigaretten-Förderer
- 22: Reihe
- 23: Reihe
- 24: Bodenplatte
- 25: Bodensteg
- 26: Formstück
- 27: Seitenwand
- 28: Deckwand
- 29: Obersteg
- 30: Führungsnase
- 31: Innenfläche
- 32: Stützrolle
- 33: Endbereich
- 34: Endfläche
- 35: Endfläche
- 36: Vorsprung
- 37: Vorsprung

## Patentansprüche

1. Vorrichtung zur Bildung von Zigaretten-Gruppen (11), die durch Stößel (18) aus einem Zigaretten-Magazin (12) mit aufrechten Schächten (13) für je eine Reihe von übereinander liegenden Zigaretten (10) ausschiebbar sind, wobei die Zigaretten-Gruppe (11) nach Austritt aus dem Zigaretten-Magazin (12) entlang einer Förderstrecke mit einem trichterförmig ausgebildeten, Seitenwände (27) mit konvergierenden Innenflächen (31) aufweisenden Formstück (26) zum Querverschieben von Zigaretten (10) transportierbar und in eine Tasche (20) eines Zigaretten-Förderers (21) einschiebbar sind, **dadurch gekennzeichnet, dass** mindestens randseitige Stößel (18) mit den zugeordneten Zigaretten (10) im Bereich des Formstücks (26) unter elastischer Verformung quer bewegbar sind.

2. Vorrichtung nach Anspruch 1, **gekennzeichnet durch** folgende Merkmale:
a) die stegartig ausgebildeten Stößel (15, 16, 17, 18) für jeden Schacht (13) des Zigaretten-Magazins (12) sind mit unterschiedlicher wirksamer Höhe zum Erfassen von unterschiedlichen Anzahlen von Zigaretten (10) je Schacht (13), insbesondere zum Erfassen von alternativ zwei oder drei übereinanderliegenden Zigaretten ausgebildet,
b) Stößel (16, 18) mit geringerer konstruktiver Höhe zum Erfassen von insbesondere zwei Zigaretten (10) sind mit Abstand von einer unteren Ausschubebene des Zigaretten-Magazins (12), insbesondere mit Abstand von einer Bodenplatte (24) angeordnet, derart, dass die ausgeschobenen Zigaretten des betreffenden Schachts (13) der Höhe nach versetzt zu den Zigaretten (10) benachbarter Schächte (13) während des Ausschubs liegen.

3. Vorrichtung nach Anspruch 1 oder 2, **dadurch gekennzeichnet, dass** zur Bestimmung unterschiedlicher Relativstellungen von Zigaretten (10) in benachbarten Schächten (13) mindestens einzelne Schächte (13) bodenseitig Stützorgane aufweisen, die die jeweils untere Zigarette (10) in einem Schacht (13) abstützen unter Festlegung einer Relativstellung gegenüber Zigaretten (10) benachbarter Schächte (13), wobei die Erhöhungen bzw. Stützorgane als Stege, nämlich Bodenstege (25) ausgebildet sind.

4. Vorrichtung nach Anspruch 3, **dadurch gekennzeichnet, dass** sich die Stege, nämlich Bodenstege (25) im Bereich des Formstücks (26) im Anschluss an das Zigaretten-Magazin (12) erstrecken, vorzugsweise als ununterbrochene Fortsetzung der Bodenstege (25) im Bereich der Schächte (13).

5. Vorrichtung nach Anspruch 1 oder einem der weiteren Ansprüche, **dadurch gekennzeichnet, dass** das Formstück (26) als im Querschnitt geschlossener Kanal ausgebildet ist, wobei Stege im Bereich der Bodenplatte (24) und einer Deckwand (28) angeordnet sind, nämlich Bodenstege (25) und Oberstege (29), jeweils im Bereich von aufrechten Reihen (23) von Zigaretten (10) mit geringerer Anzahl an Zigaretten (10).

6. Vorrichtung nach Anspruch 2 oder einem der weiteren Ansprüche, **gekennzeichnet durch** folgende Merkmale:
a) randseitige Reihen (23) der Zigaretten-Gruppe (11) bestehen aus jeweils vorzugsweise zwei übereinander angeordneten Zigaretten (10),
b) zu den randseitigen Reihen (23) benachbarte Reihen (22) bestehen aus vorzugsweise drei übereinander angeordneten Zigaretten (10),
c) die Zigaretten (10) der randseitigen Reihe (23) sind der Höhe nach versetzt angeordnet zu den Zigaretten (10) der benachbarten Reihe (22),
d) die Reihen (22, 23) sind im Bereich des Formstücks (26) quer verschiebbar bis zur Anlage aneinander in versetzter Relativlage - "auf Lücke".

7. Vorrichtung nach Anspruch 5 oder einem der weiteren Ansprüche, **dadurch gekennzeichnet, dass** die Stege - Bodenstege (25), Oberstege (29) - im Bereich des Formstücks (26) der - quergerichteten - Verschiebung der zugeordneten Zigaretten (10) bzw. Reihen (22, 23) folgen, insbesondere durch konvergierenden Verlauf der Stege.

8. Vorrichtung nach Anspruch 1 oder einem der weiteren Ansprüche, **dadurch gekennzeichnet, dass** mindestens randseitige Stößel (18) an einem Stütz- bzw. Füh-rungsorgan anliegen, insbesondere an einer Stützrolle (32) außerhalb des Bereichs des Zigaretten-Magazins (12), wobei aufgrund der Relativstellung der Stützrolle (32) einerseits und der Form und Stellung der Stößel (18) andererseits diese im Bereich des Formstücks (26) durch elastische Verformung aufgrund Anlage an den Stützrollen (32) querbewegbar sind.

9. Vorrichtung nach Anspruch 1 oder einem der weiteren Ansprüche, **dadurch gekennzeichnet, dass** Zigaretten (10) randseitiger Reihen (22, 23) relativ zu den zugeordneten Stößeln (16, 17) querbewegbar und Endflächen (34, 35) der Stößel (16, 17) schräggerichtet sind entsprechend der Querbewegung der Zigaretten (10).

10. Vorrichtung nach Anspruch 5 oder einem der weiteren Ansprüche, **dadurch gekennzeichnet, dass** Taschen (20) eines an das Zigaretten-Magazins (12) bzw. an das Formstück (26) anschließenden Zigaretten-Förderers (21) stegartige Vorsprünge (36, 37) aufweisen in Fortsetzung bzw. Verlängerung der Bodenstege (25) und Oberstege (29).

## Claims

1. An apparatus for forming cigarette groups (11) that can be pushed by push rods (18) out of a cigarette magazine (12) with upright shafts (13) for a respective row of cigarettes (10) lying one above the other, it being possible to transport the cigarette groups (11), after they have exited the cigarette magazine (12), along a conveying section containing a funnel-shaped part (26) having side walls (27) with converging inner faces (31) for the purpose of shifting cigarettes (10) in a transverse direction and insert said cigarette groups (11) into a pocket (20) of a cigarette conveyor (21), **characterized in that** at least marginal push rods (18) can be displaced transversely with their assigned cigarettes (10) in the region of the shaped part (26) with elastic deformation.

2. The apparatus according to Claim 1, **characterized by** the following features:
a) the arm-like push rods (15, 16, 17, 18) for each shaft (13) of the cigarette magazine (12) are designed with a different effective height for seizing different numbers of cigarettes (10) per shaft (13), in particular for seizing alternatively either two or three stacked cigarettes,
b) push rods (16, 18) with a relatively small overall height for seizing, in particular, two cigarettes (10) being arranged at a distance from a lower push-out plane of the cigarette magazine (12), in particular at a distance from a base plate (24), in such a way that the pushed-out cigarettes (10) of the shaft (13) in question are offset in terms of height with respect to cigarettes (10) of adjacent shafts (13) during the pushing-out operation.

3. The apparatus according to Claim 1 or 2, **characterized in that**, in order to determine different relative positions of cigarettes (10) in adjacent shafts (13), at least individual shafts (13) have at their bottom end supporting elements, which support the respectively lower cigarette (10) in a shaft (13) while fixing a relative position with respect to cigarettes (10) of adjacent shafts (13), the elevations or supporting elements being designed as ribs, namely as bottom ribs (25),

4. The apparatus according to Claim 3, **characterized in that** the ribs, namely bottom ribs (25), extend in the region of the shaped part (26) subsequent to the cigarette magazine (12), preferably as an uninterrupted continuation of the bottom ribs (25) in the region of the shafts (13).

5. The apparatus according to Claim 1 or one of the further Claims, **characterized in that** the shaped part (26) is designed as a channel of closed cross section, ribs being arranged in the region of the base plate (24) and a covering wall (28), namely bottom ribs (24) and top ribs (29), in each case in the region of vertical rows (23) of cigarettes (10) with a smaller number of cigarettes (10).

6. The apparatus according to Claim 2 or one of the further Claims, **characterized by** the following features:
a) marginal rows (23) of the cigarette group (11) each comprise preferably two cigarettes arranged one above the other,
b) rows (22) adjacent to the marginal rows (23) each comprise preferably three cigarettes arranged one above the other,
c) the cigarettes (10) of the marginal row (23) are offset with respect to the height of the cigarettes (10) of the adjacent row (22),
d) the rows (22, 23) can be displaced transversely in the region of the shaped part (26) until they abut one another in an offset, or "staggered", relative position.

7. The apparatus according to Claim 5 or one of the further Claims, **characterized in that** the ribs - bottom ribs (25), top ribs (29) - in the region of the shaped part (26) follow the - transversely directed - displacement of the associated cigarettes (10) or rows (22, 23), in particular as a result of the converging course of the ribs.

8. The apparatus according to Claim 1 or one of the further Claims, **characterized in that** at least marginal push rods (18) bear against a supporting or guiding element, in particular against a supporting roller (32) outside the region of the cigarette magazine (12), it being possible, owing to the relative position of the supporting roller (32) on the one hand and the shape and position of the push rods (18) on the other hand, for said push rods to be moved transversely in the region of the shaped part (26) by elastic deformation as a result of bearing against the supporting rollers (32).

9. The apparatus according to Claim 1 or one of the further Claims, **characterized in that** cigarettes (10) of marginal rows (22, 23) can be moved transversely relative to the associated push rods (16, 17), and end faces (34, 35) of the push rods (16, 17) are directed obliquely corresponding to the transverse movement of the cigarettes (10).

10. The apparatus according to Claim 5 or one of the further Claims, **characterized in that** pockets (20) of a cigarette conveyor (21) adjoining the cigarette magazine (12) or the shaped part (26) have rib-like projections (36, 37) in a continuation or extension of the bottom ribs (25) and top ribs (29).

## Revendications

1. Dispositif pour former des groupes de cigarettes (11) qui peuvent être expulsés par des poussoirs (18) d'un magasin à cigarettes (12) ayant des puits verticaux (13) pour, respectivement, une rangée de cigarettes superposées (10), dans lequel le groupe de cigarettes (11), après sa sortie du magasin à cigarettes (12), peut être transporté le long d'un trajet de transport à l'aide d'une pièce façonnée (26) conformée en entonnoir et présentant des parois latérales (27) avec des surfaces internes convergentes (31) pour déplacer transversalement des cigarettes (10) et être inséré dans une poche (20) d'un transporteur de cigarettes (21), **caractérisé en ce qu'**au moins des poussoirs (18) situés sur les bords peuvent être déplacés transversalement avec les cigarettes associées (10) dans la zone de la pièce façonnée (26) sous l'effet d'une déformation élastique.

2. Dispositif selon la revendication 1, **caractérisé par** les caractéristiques suivantes :
a) les poussoirs conformés en nervures (15, 16, 17, 18) pour chaque puits (13) du magasin à cigarettes (12) sont conçus avec des hauteurs efficaces différentes pour saisir des nombres différents de cigarettes (10) par puits (13), en particulier pour saisir en variante deux ou trois cigarettes superposées,
b) les poussoirs (16, 18) de moindre hauteur de construction pour saisir en particulier deux cigarettes (10) sont aménagés à distance d'un plan d'extraction inférieur du magasin à cigarettes (12), en particulier à distance d'une plaque de fond (24), de sorte que les cigarettes extraites du puits concerné (13) se trouvent décalées en hauteur par rapport aux cigarettes (10) de puits voisins (13) pendant l'extraction.

3. Dispositif selon la revendication 1 ou 2, **caractérisé en ce que**, pour déterminer différentes positions relatives de cigarettes (10) dans des puits voisins (13), au moins des puits individuels (13) présentent, côté fond, des organes d'appui qui supportent la cigarette respectivement inférieure (10) dans un puits (13) en déterminant une position relative par rapport à des cigarettes (10) de puits voisins (13), les élévations ou les organes d'appui se présentant sous la forme de nervures, notamment de nervures de fond (25).

4. Dispositif selon la revendication 3, **caractérisé en ce que** les nervures, en fait les nervures de fond (25), s'étendent dans la zone de la pièce façonnée (26), à la suite du magasin à cigarettes (12), de préférence dans le prolongement ininterrompu des nervures de fond (25) dans la zone des puits (13).

5. Dispositif selon la revendication 1 ou selon l'une quelconque des autres revendications, **caractérisé en ce que** la pièce façonnée (26) se présente sous la forme d'un canal fermé en coupe transversale, dans lequel des nervures sont aménagées dans la zone de la plaque de fond (24) et d'une paroi de recouvrement (28), c'est-à-dire sous la forme de nervures de fond (25) et de nervures de recouvrement (29), respectivement, dans la zone de rangées verticales (23) de cigarettes (10) ayant un plus petit nombre de cigarettes (10).

6. Dispositif selon la revendication 2 ou selon l'une quelconque des autres revendications, **caractérisé par** les caractéristiques suivantes :
a) les rangées (23), situées sur les bords, du groupe de cigarettes (11) sont respectivement constituées de préférence de deux cigarettes superposées (10),
b) les rangées (22) voisines des rangées (23) situées sur les bords sont constituées de préférence de trois cigarettes superposées (10),
c) les cigarettes (10) de la rangée (23) située sur le bord sont disposées de manière décalée en hauteur par rapport aux cigarettes (10) de la rangée voisine (22),
d) les rangées (22, 23) peuvent être déplacées transversalement dans la zone de la pièce façonnée (26) jusqu'à venir s'appuyer l'une contre l'autre en position relative décalée - "en chicanes".

7. Dispositif selon la revendication 5 ou selon l'une quelconque des autres revendications, **caractérisé en ce que** les nervures - c'est-à-dire les nervures de fond (25) et les nervures de recouvrement (29) - suivent, dans la zone de la pièce façonnée (26), le déplacement - transversalement orienté - des cigarettes (10) ou des rangées (22, 23) associées, en particulier par un tracé convergent des nervures.

8. Dispositif selon la revendication 1 ou selon l'une quelconque des autres revendications, **caractérisé en ce qu'**au moins des poussoirs (18) situés sur les bords s'appliquent sur un organe d'appui ou de guidage, en particulier sur un rouleau d'appui (32) en dehors de la zone du magasin à cigarettes (12), dans lequel, en raison de la position relative du rouleau d'appui (32), d'une part, et de la forme et de la position des poussoirs (18), d'autre part, ceux-ci peuvent être déplacés transversalement dans la zone de la pièce façonnée (26) par déformation élastique en raison de l'application sur les rouleaux d'appui (32).

9. Dispositif selon la revendication 1 ou selon l'une quelconque des autres revendications, **caractérisé en ce que** les cigarettes (10) de rangées (22, 23) situées sur les bords peuvent être déplacées transversalement par rapport aux poussoirs associés (16, 17) et les surfaces d'extrémité (34, 35) des poussoirs (16, 17) sont orientées en biais, conformément au déplacement transversal des cigarettes (10).

10. Dispositif selon la revendication 5 ou selon l'une quelconque des autres revendications, **caractérisé en ce que** des poches (20) d'un transporteur de cigarettes (21) disposé à la suite du magasin à cigarettes (12) ou de la pièce façonnée (26) présentent des saillies en forme de nervures (36, 37) à la suite ou dans le prolongement des nervures de fond (25) et des nervures de recouvrement (29).
